# EUROPÄISCHE PATENTSCHRIFT

(11) **EP 3 179 159 B1**
(45) Veröffentlichungstag und Bekanntmachung des Hinweises auf die Patenterteilung: **06.06.2018**
(21) Anmeldenummer: 16202031.7
(22) Anmeldetag: 02.12.2016
(51) Int. Cl.: F21S 9/03, G02B 6/00, F21V 9/38, F21Y 115/10, F21W 131/109, F21V 8/00, F21V 21/088, F21V 21/06

(54) **GARTENLEUCHTE**
GARDEN LIGHT
ÉCLAIRAGE DE JARDIN

(30) Priorität: 08.12.2015 DE 102015224592
(43) Veröffentlichungstag der Anmeldung: 14.06.2017
(73) Patentinhaber: Krinner Innovation GmbH, 94342 Strasskirchen (DE)
(72) Erfinder: WEIN, Reinhold, 94353 Haibach (DE)
(74) Vertreter: Himmelsbach, Mathias

(56) Entgegenhaltungen:
- EP-A1- 1 878 965
- FR-A1- 2 627 844
- FR-A1- 3 020 119
- GB-A- 2 512 397
- US-A1- 2006 044 785

## Beschreibung

Die Erfindung betrifft eine Gartenleuchte, insbesondere eine Gartenleuchte aufweisend eine von einem Solarpanel gespeiste Lichtquelle.

Als Gartendekoration sind sogenannte Sonnenfänger bekannt, welche auch unter dem Markennamen Cazador-del-sol vertrieben werden. Die Sonnenfänger weisen eine Sonnenscheibe auf, welche bei Lichteinfall eine Leuchtkraft entfalten. Die Sonnenscheibe besteht dabei aus Kunststoff und ist in transparenten Leuchtfarben wie beispielsweise gelb, pink oder grün eingefärbt. Die Sonnenscheibe ist auf einem Schwingstab montiert, welcher in den Erdboden gesteckt werden kann.

Aus dem Stand der Technik sind darüber hinaus verschiedenartige Gartenleuchten mit Solarpanels zur Versorgung eines Leuchtmittels mit Energie bekannt. Aus WO 2007/000 613 A1 ist eine Gartenleuchte bekannt, bei welcher Solarpanels auf Stäben blattartig angeordnet sind. Auf einem weiteren Stab ist eine blütenartig ausgebildete Leuchte angeordnet, welche zudem ein Batteriefach umfasst. Die Solarpanels sind über in den Stäben angeordnete elektrische Leitungen mit der Leuchte verbunden.

Ferner ist aus CN 2 795 641 Y eine solarbetriebene Gartenleuchte bekannt. Die Gartenleuchte weist eine Lampensäule auf, an welcher eine Batteriebox mit einem Solarpanel befestigt ist. Am oberen Ende der Säule sind eine Leuchtdiode und eine Vielzahl von optischen Fasern angeordnet, aus welchen das von Licht der Leuchtdiode an den Faserenden austritt.

DE 203 07 319 U1 zeigt eine Solarlampe mit wenigstens einem Gehäuse, einer Solarzelle, einem Energiespeicher und einem Leuchtmittel. Das Leuchtmittel enthält zumindest eine Leuchtdiode, einen Lichtleiter und einen Kristall. Die Leuchtdiode erzeugt ein Licht, welches mittelbar durch den Lichtleiter zum Kristall geführt wird und erst durch den Kristall austritt.

Die Aufgabe der vorliegenden Erfindung besteht darin, eine Gartenleuchte bereitzustellen, welche autark betreibbar ist und bei welcher die Elektronik als kompakte Einheit ausbildbar ist.

Die Aufgabe wird durch eine Gartenleuchte mit den in den Hauptansprüchen definierten Merkmalen bereitgestellt. Bevorzugte Ausbildungen ergeben sich aus den Unteransprüchen.

Gemäß einem ersten Aspekt der Erfindung weist die Gartenleuchte ein Fundament, eine von einem Solarpanel gespeiste Lichtquelle, welche im Betrieb Licht im sichtbaren Spektrum aussendet, einen Stab aus einem ersten selbstleuchtenden Kunststoff und ein mit dem Stab verbundenes Leuchtelement aus einem zweiten selbstleuchtenden Kunstsoff auf. Die Lichtquelle ist derart an einer ersten Stirnseite des Stabs angeordnet, dass das von der Lichtquelle emittierte Licht in den Stab eingekoppelt wird und diesen durchdringt. Der Stab ist derart mit dem Leuchtelement verbunden, dass das in den Stab eingekoppelte Licht in das Leuchtelement eingeleitet wird, so dass sowohl der Stab als auch das Leuchtelement über ihre Oberfläche das vom selbstleuchtenden Kunststoff emittierte und das von der Lichtquelle eingeführte Licht zumindest teilweise zeitparallel abstrahlen. Vorzugsweise ist der Stab als Schwingstab ausgebildet.

Gemäß einem zweiten Aspekt der Erfindung weist die Gartenleuchte ein Fundament, eine von einem Solarpanel gespeiste Lichtquelle, welche im Betrieb Licht im sichtbaren Spektrum aussendet, einen Schwingstab aus einem ersten lichtleitenden Kunststoff und ein mit dem Schwingstab verbundenes Leuchtelement aus einem zweiten lichtleitenden Kunststoff auf. Die Lichtquelle ist derart an einer ersten Stirnseite des Schwingstabs angeordnet, dass das von der Lichtquelle emittierte Licht in den Schwingstab eingekoppelt wird und diesen durchdringt. Der Schwingstab ist derart mit dem Leuchtelement verbunden, dass das in den Schwingstab eingekoppelte Licht in das Leuchtelement eingeleitet wird, so dass sowohl der Schwingstab als auch das Leuchtelement über ihre Oberfläche das von der Lichtquelle eingeleitete Licht abstrahlen. Vorzugsweise ist der erste und/oder zweite lichtleitende Kunststoff selbstleuchtend.

Erfindungsgemäß dient der Stab aus lichtleitendem Kunststoff sowohl als Übertragungselement, um Licht von der Lichtquelle zum Leuchtelement zu übertragen, als auch selbst als Leuchtelement. Diese Doppelfunktion hat den Vorteil, die Anzahl der Bauteile zu reduzieren und ermöglicht es, die Elektronik der Gartenleuchte wie beispielsweise das Solarpanel bzw. Solarmodul, die Lichtquelle, weitere Sensoren und Schalter sowie Energiespeicher in kompakter Weise anzuordnen, ohne dass lange elektrische Leitungen verlegt werden müssen. Das Licht einer beispielsweise im Wesentlichen punktförmigen oder zumindest örtlich sehr begrenzenden Lichtquelle wird über den Stab und das Leuchtelement auf eine verhältnismäßig große Fläche verteilt, welche Licht abstrahlt. Da Gartenleuchten bekanntermaßen der Witterung ausgesetzt sind, hat eine kompakte Bauweise der Elektronik den Vorteil, dass nicht die gesamte Gartenleuchte, sondern nur die die Elektronik enthaltenden Bauteile insbesondere gegen Feuchtigkeitseintritt abgeschirmt werden müssen. Darüber hinaus wird bei der kompakten Anordnung der Elektronik vermieden, dass diese beispielsweise an exponierten Stellen der Gartenleuchte einem erhöhten Zerstörungspotential unterliegt. Zudem wird aufgrund des Verzichts auf lange Elektroleitungen die Gefahr von Kabelbrüchen oder Feuchtigkeitseintritt minimiert und dadurch sind Fehlfunktionen vermeidbar.

Vorzugsweise ist die Elektronik als kompakte Einheit ausgebildet und überwiegend in einem Solarpanelträger untergebracht. In den Solarpanelträger sind dabei das zumindest eine Solarpanel integriert. Ferner besteht die Möglichkeit, weitere Elektronikelemente wie beispielsweise einen Energiespeicher, insbesondere in Form eines Akkumulators, Sensoren wie beispielsweise Helligkeitssensoren zum Einschalten der Gartenleuchte sowie Schalter zum manuellen Ein- bzw. Ausschalten der Gartenleuchte zu integrieren. Bei der Verwendung von Helligkeitssensoren sind diese insbesondere derart ausgebildet, dass sie erst bei Unterschreiten einer vordefinierten Umgebungshelligkeit das Leuchtelement der Gartenleuchte einschalten. Ferner kann die Elektronik Batteriemanagementsysteme zum Laden bzw. Entladen des zumindest einen Akkumulators sowie Akkumulatorschutzschaltungen enthalten.

Sowohl der Stab als auch das Leuchtelement sind erfindungsgemäß aus einem lichtleitenden Kunststoff hergestellt. Vorzugsweise handelt es sich bei dem Kunststoff um Polymethylmethacrylat (PMMA), welches umgangssprachlich auch als Acrylglas oder Plexiglas bezeichnet wird. Der Stab ist beispielsweise durch Extrudieren oder im Spritzgussverfahren herstellbar. Das Leuchtelement wird vorzugsweise durch Spritzgießen hergestellt. Der lichtleitende Kunststoff transportiert dabei sowohl einfallendes Sonnenlicht als auch von der Lichtquelle emittiertes Licht.

Auch kann der Kunststoff selbstleuchtende Eigenschaften aufweisen. Die selbstleuchtenden Eigenschaften zeigen sich insbesondere dadurch, dass der Kunststoff wie von Innen erhellt erscheint. Insbesondere wird als selbstleuchtende Eigenschaft die Lumineszenz angesehen. Vorzugsweise werden dem Kunststoff, insbesondere dem PMMA, selbstleuchtende Additive im Herstellprozess zugegeben. Hierbei handelt es sich insbesondere um fluoreszierende und/oder phosphoreszierende Additive. Der lumineszierende Kunststoff wird dabei durch das Sonnenlicht, insbesondere durch das im Sonnenlicht enthaltene UV-Licht aktiviert. Ferner ist bei manchen lumineszierenden Kunststoffen dieser durch das Licht der Lichtquelle aktivierbar. Somit besteht die Möglichkeit, den Kunststoff zeitgleich durch Lichtquelle und Sonnenlicht zu aktivieren oder die Lichtquelle erst bei ungenügendem bzw. keinem einfallenden Sonnenlicht zur Aktivierung des lumineszierenden Kunststoffes einzuschalten. Dadurch wird ein doppelter Nutzen bereitgestellt: Zum einen wird am Tag bei Sonneneinfall das Selbstleuchten durch das Sonnenlicht aktiviert und zum anderen wird nachts das Selbstleuchten durch die Lichtquelle aktiviert.

Durch eine Überlagerung der selbstleuchtenden Eigenschaften des Kunststoffes, d.h. insbesondere durch Desaktivierung des Kunststoffs, sowie dem Abstrahlen des von der Lichtquelle emittierten Lichts über die Oberfläche sowie auch durch Brechung und Reflektion austretendes Licht entsteht eine intensive und optisch ansprechende Beleuchtung. Das Abstrahlen kann vorzugsweise dadurch intensiviert werden, dass der lichtdurchlässige Kunststoff selbst eingefärbt ist und somit das Licht der Lichtquelle farbig abstrahlt. Diese Intensivierung tritt insbesondere dann zu Tage, wenn die Einfärbung des Kunststoffes und die emittierte Lichtfarbe des selbstleuchtenden Kunststoffes bei der Desaktivierung eine ähnliche Farbe aufweisen und sich somit optisch gegenseitig verstärken.

Je nach Wahl des lumineszierenden Kunststoffes ist die Lichtfarbe des emittierten Lichts bei der Desaktivierung beeinflussbar. Beispielsweise wird Licht mit einer Wellenlänge im gelben, orangenen oder grünen Spektrum emittiert. Phosphoreszierende Kunststoffe haben dahingehend den Vorteil, dass sie bei Aktivierung durch Sonnenlicht selbst dann noch nachleuchten, wenn wenig bzw. kein Sonnenlicht mehr verfügbar ist. Somit lädt das Sonnenlicht die Gartenleuchte tagsüber durch das Solarpanel und Aktivierung des Lumineszenzkunstoffs auf und die Gartenleuchte speichert die Energie für die Nacht bzw. die Dämmerung. Dadurch kann die Lichtabstrahlung der Gartenleuchte erhöht bzw. die Lichtleistung der Lichtquelle reduziert werden.

Vorzugsweise sind der Stab und das Leuchtelement aus demselben Kunststoff hergestellt. Alternativ können diese jedoch auch aus unterschiedlichen Kunststoffen hergestellt werden. Als unterschiedliche Kunststoffe werden dabei insbesondere Unterschiede in den Additiven, welche zur Einfärbung des Kunststoffes verwendet werden bzw. für seine selbstleuchtenden Eigenschaften verantwortlich sind, angesehen. Durch unterschiedliche Kunststoffe strahlt beispielsweise der Stab Licht in einer anderen Lichtfarbe ab als das Leuchtelement.

Der Stab und das Lichtelement sind vorzugsweise über einen lichtdurchlässigen Kleber wie beispielsweise Acrylglaskleber verbunden. Weiter vorzugsweise ist das Leuchtelement als Scheibe ausgebildet, welche im Bereich einer zweiten Stirnseite am Stab angeordnet ist. Die Scheibe weist beispielsweise ein Durchgangs- oder Sackloch auf, welches den Stab umgibt. Vorzugsweise ist der Stab mit einer Schulter ausbildbar, an welcher die Scheibe anliegt. Auf der Längsachse des Stabs ist an seiner zweiten Stirnseite bzw. am Leuchtelement vorzugsweise eine Abdeckung angeordnet. Die Abdeckung besteht dabei insbesondere aus einem lichtundurchlässigen, insbesondere reflektierenden Material. Dadurch wird ein Großteil des durch den Stab ankommenden Lichts in das Leuchtelement eingeleitet und tritt nicht entlang der Längsachse des Stabs aus. Dadurch soll insbesondere eine gleichmäßige Lichtverteilung und Ausleuchtung des Stabs und des Leuchtelements erreicht werden. Eine gleichmäßige Ausleuchtung ist dabei auch durch entsprechende Gestaltung der Übergänge zwischen Stab und Leuchtelement erreichbar, wie beispielsweise durch einen konischen Endbereich am Stab sowie eine entsprechende Gestaltung der Scheibe.

Die Scheibe ist auch in verschieden Formen wie beispielsweise in Blütenform ausbildbar. In einer alternativen Ausbildung besteht das Leuchtelement aus mehreren Scheiben, welche entlang beanstandet am Stab angeordnet sind. Die Scheiben weisen in einer Ausbildung unterschiedliche Durchmesser aus und definieren eine dreidimensionale Oberfläche wie beispielsweise eine Kugel oder einen Kegel. Es sind jedoch auch nicht kreisförmige Scheiben ausbildbar. In einer weiteren alternativen Ausbildung sind beispielsweise vier Leuchtelemente längs am Stab, kreuzförmig angeordnet und haben eine Kontur in Form eines Motivs, beispielsweise eines Christbaums.

Die Lichtquelle ist vorzugsweise als LED, insbesondere als SMD-LED ausgebildet. Die LED sendet dabei insbesondere kaltweißes Licht aus. Alternativ ist die LED als sogenannte RGB-LED ausgebildet, welche je nach Ansteuerung unterschiedliche Lichtfarben emittiert. Dadurch ist die Lichtfarbe beispielsweise durch eine Steuereinheit veränderbar. Die Lichtquelle ist an der ersten Stirnseite des Stabs angeordnet. Bei einer Ausbildung als flache SMD LED ist die zweite Stirnseite ebenfalls als plane Fläche ausgebildet, an welcher die LED anliegt. In einer weiteren Ausbildung weist der Stab an seiner zweiten Stirnseite eine Ausnehmung auf, in welcher die Lichtquelle zumindest teilweise aufgenommen ist. Die Lichtquelle ist in einer Ausbildung mit einem lichtdurchlässigen Klebstoff mit dem Stab verbunden.

Der Stab ist vorzugsweise aus einem zylindrischen Vollmaterial hergestellt. In einer Ausbildung ist der Stab als Schwingstab ausgebildet. Als Schwingstab wird dabei insbesondere verstanden, dass der Stab mit dem Leuchtelement im Wesentlichen in einer vertikalen Lage gehalten wird und beispielsweise durch eine externe Anregung wie Umwelteinflüsse ausgelenkt und in Schwingung versetzt wird. Als Schwingung wird dabei insbesondere ein langsames Wiegen, beispielsweise im Wind, verstanden. Der Stab weist insbesondere eine solche Steifigkeit auf, dass vermieden wird, dass sich der Stab mit dem Leuchtelement nicht mehr aufrichtet. Der Schwingstab weist dabei insbesondere einen Durchmesser von etwa 5 mm auf und eine Länge von etwa 50 - 80 cm. Die Dimensionierung ist dabei von der Anordnung und des Gewichts des zumindest einen Leuchtelements sowie der Anzahl der Leuchtelemente und des verwendeten Kunststoffs abhängig. Vorstehend genannte Dimensionierung wird vorzugsweise bei Verwendung einer einzigen, im Bereich der zweiten Stirnseite des Stabs angebrachten Scheibe als Leuchtelement verwendet, welche eine Dicke von 2 - 5 mm und einem Durchmesser von 10 - 30 cm, vorzugsweise 20 cm, aufwiest. Bei der Verwendung von längeren Stäben oder mehreren Leuchtelementen bzw. einem Leuchtelementen mit größerer Masse ist der Durchmesser des Stabs beispielsweise auf 8 mm vergrößerbar.

Der Stab bzw. der Schwingstab ist vorzugsweise im Bereich seiner ersten Stirnseite in einer Bohrung aufgenommen. Durch die Bohrung, welche insbesondere als Passbohrung ausgebildet ist, werden die Kräfte und Momente, welche beispielsweise durch den Schwingstab sowie Witterungseinflüsse verursacht werden, aufgenommen. Die Gartenleuchte wird über ein Fundament gehalten bzw. ist über ein Fundament im Boden verankerbar. In einer Ausbildung ist das Fundament als eine Schlag- oder Schraubhülse ausgebildet, welche in den Boden eingebracht wird. Derartige Fundamente sind insbesondere für die Garten- bzw. Balkonnutzung sowie die Nutzung in Pflanzkästen verwendbar. Alternative Fundamente sind beispielsweise Ständer oder Schraubschellen bzw. Schraubzwingen zur Befestigung an Geländern, Brüstungen, Pfosten und dergleichen. Das Fundament ist integral mit der Gartenleuchte oder zumindest als fester Bestandteil derselben ausbildbar. Alternativ ist das Fundament auswechselbar gestaltet. Dies hat den Vorteil, dass verschiedene bzw. verschiedenartige Fundamente für eine Gartenleuchte verwendbar sind, d. h. dass die Fundamente austauschbar sind. Des Weiteren wird durch ein Verbleiben des Fundaments an seinem Ort ein erneutes Aufstellen und Inbetriebnehmen der Gartenleuchte erleichtert.

Bevorzugte Ausführungsformen der erfindungsgemäßen Gartenleuchte werden im Folgenden anhand der Figuren näher erläutert. Dabei zeigt
- Figur 1:: eine erfindungsgemäße Gartenleuchte,
- Figur 2:: eine als Leuchtelement ausgebildete Scheibe,
- Figur 3:: eine Schnittansicht eines Teilbereichs der Gartenleuchte im Bereich der Licht-quelle und
- Figuren 4a - c:: verschiedene Ausbildungsformen eines erfindungsgemäßen Fundaments.

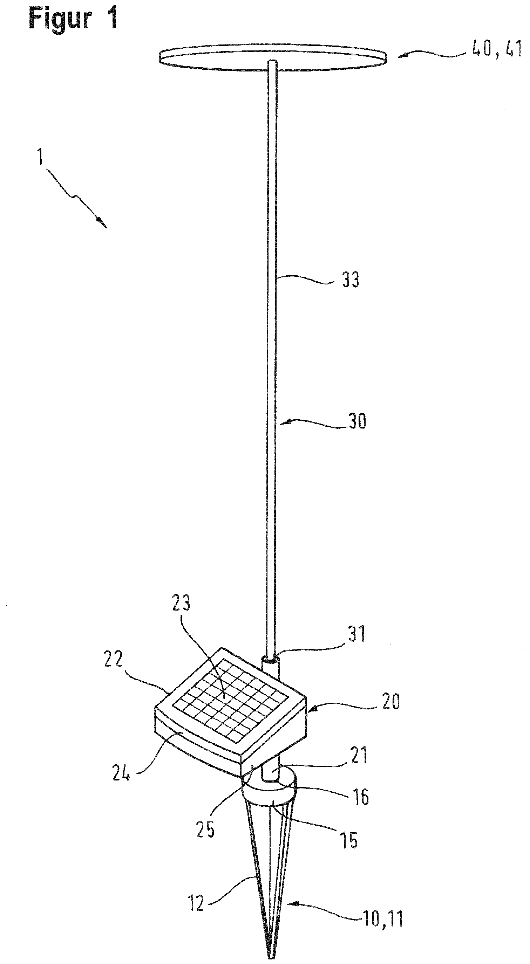

Eine erste Ausführungsform einer erfindungsgemäßen Gartenleuchte 1 ist in Figur 1 gezeigt. Die Gartenleuchte 1 umfasst ein Fundament 10, welches als Einschlaghülse 11 ausgebildet ist. Die Einschlaghülse 11 weist kreuzförmig angeordnete Einschlagkeile 12 auf. Die Außenkontur der Einschlagkeile 12 ist derart ausgebildet, dass sie sich nach unten verjüngen und beispielsweise in einer Spitze enden. An ihrer Oberseite weist die Einschlaghülse 11 eine scheibenförmige Abdeckung 15 auf. Die scheibenförmige Abdeckung 15 schließt beim Versenken der Einschlaghülse im Erdboden vorzugsweise bündig mit diesem ab. In der Abdeckung 15 ist eine Einstecköffnung 16 vorhanden, welche sich weiter nach unten in das Fundament 10 hinein erstreckt.

Die Gartenleuchte umfasst ferner ein Basismodul 20. Das Basismodul 20 weist an seiner Unterseite einen Befestigungsabschnitt 21 auf. Der Befestigungsabschnitt 21 ist in die Einstecköffnung 16 einbringbar. Die Einstecköffnung 16 und der Befestigungsabschnitt 21 sind dabei derart ausgebildet, dass das Fundament 10 und die übrigen Teile der Gartenleuchte 10 sicher verbindbar sind.

Das Basismodul 20 umfasst ferner einen Solarpanelträger 22, welcher an seiner Oberseite mit einem Solarpanel 23 bestückt ist. Der Solarpanelträger 22 ist dabei an seiner Oberseite derart gestaltet, dass das Solarpanel 23 zur Sonne geneigt ist. Der Solarpanelträger 22 ist zweiteilig ausgebildet und beinhaltet in seinem Inneren ein Batteriefach 24. Im Batteriefach 24 ist ein Energiespeicher 25 angeordnet, welcher die vom Solarpanel 23 empfangene elektrische Energie speichert. In einer Ausbildung sind im Solarpanelträger 22 weitere Sensoren wie Bewegungssensoren, Helligkeitssensoren und dergleichen sowie die Steuerelektronik für die Gartenleuchte 1 angeordnet. Der Energiespeicher 25 ist dabei in einer Ausbildung als Akkumulator ausgebildet, kann jedoch in anderen Ausführungsformen auch als Kondensator oder dergleichen ausgebildet sein.

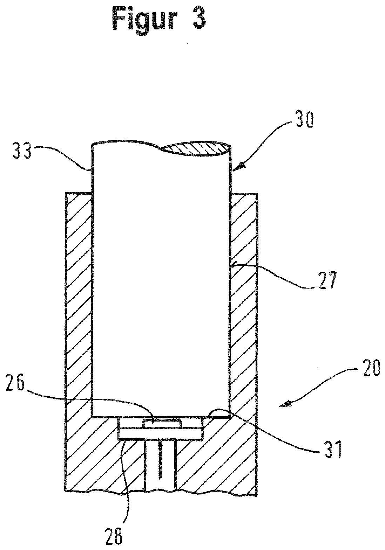

Vom Energiespeicher 25 wird eine LED 26 als Lichtquelle gespeist. Die LED 26 ist im oberen Bereich des Basismoduls 20 untergebracht. Die LED 26 ist dabei als SMD-LED ausgebildet und wird, wie in Figur 3 gezeigt, im Basismodul 20 gehalten. Die LED 26 ist an einer Stirnseite 31 eines als Schwingstab ausgebildeten Stabs 30 angeordnet. Der zylindrische Schwingstab 30 wird in einer zentralen Bohrung 27 im Basismodul 20 gehalten. Der Schwingstab 31 ist in die Bohrung 27 eingeklebt. In einer alternativen Ausbildung ist der Schwingstab 30 in die Bohrung 27 eingesetzt und über eine nicht gezeigten Schnapp- bzw. Rastverbindung mit dem Basismodul 20 verbunden. Die SMD-LED 26 wird in einer Tasche 28 am unteren Ende der Bohrung 27 gehalten. Dadurch wird sichergestellt, dass das von der LED ausgesendete Licht über die Stirnseite 31 in den Schwingstab 30 eintritt und sich in diesem ausbreitet.

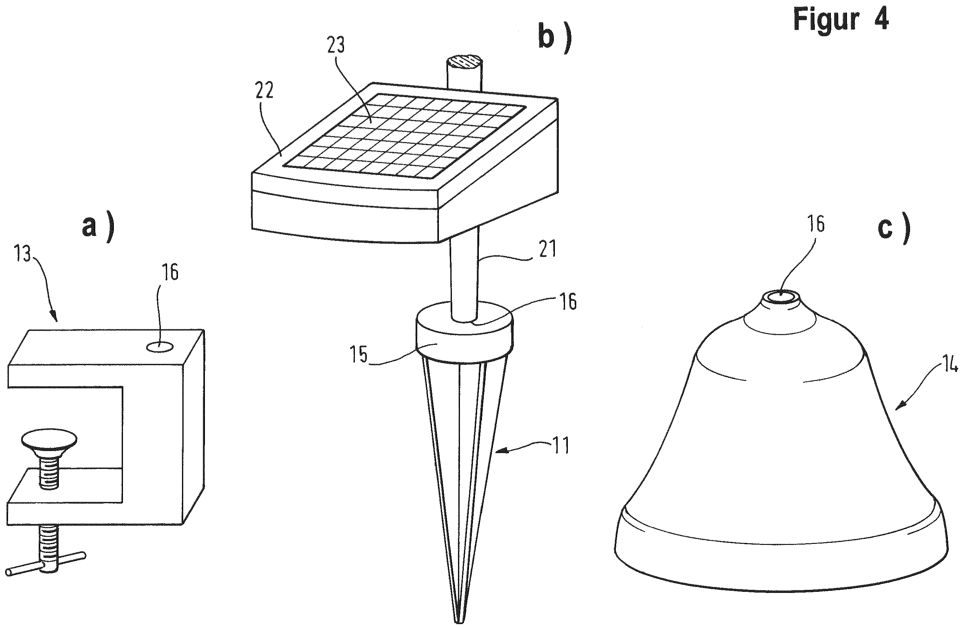

Das Basismodul 20 ist dabei derart ausgebildet, dass der Solarpanelträger 22 in einem vordefinierten Abstand über dem Fundament 10 angeordnet ist. Im Falle der in Figur 1 und 4b gezeigten Einschlaghülse 11 ist der Solarpanelträger 22 in einem vordefinierten Abstand über der Abdeckung 15 angeordnet. Die Abdeckung 15 ist in der Regel bündig mit dem Erdboden, so dass der Solarpanelträger 22 den Erdboden nicht berührt. Dadurch kann vermieden werden, dass der Solarpanelträger 22 sich in einer Pfütze befindet und Schaden nimmt. Ferner ist das Basismodul wasserabweisend bzw. wasserdicht ausgebildet und schützt somit die in ihm untergebrachte Elektronik.

Der Schwingstab 30 besteht aus Polymethylmethacrylat, kurz PMMA, was auch umgangssprachlich als Acrylglas bezeichnet wird. Ferner ist der lichtleitende Kunststoff in einer ersten Ausführung grün, in einer Zweiten gelb und in einer Dritten orange ausgebildet. Zusätzlich weist der Kunststoff fluoreszierende Additive auf, welche Licht in der Farbe abstrahlen, in welcher der Kunststoff auch eingefärbt ist. Demzufolge ist die Wellenlänge, mit welcher die fluoreszierenden Additive Licht bei der Desaktivierung emittieren auf die Kunststofffarbe abgestimmt. Die selbstleuchtenden Additive sind dabei vom Sonnenlicht aktivierbar. Zusätzlich sind die Additive in einer weiteren Ausbildung auch von der LED-Lichtquelle 26 aktivierbar.

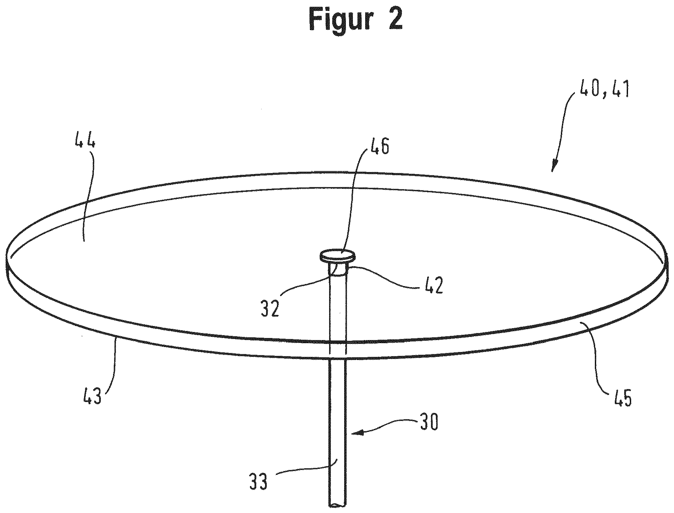

Im Bereich der zweiten Stirnfläche 32 ist die Mantelfläche 33 des Schwingstabs 30, wie auch in Figur 2 gezeigt, von einem als Scheibe 41 ausgebildeten Leuchtelement 40 umgeben. Die Scheibe 41 ist kreisrund ausgebildet und weist in ihrem Zentrum eine Bohrung 42 auf. Die Bohrung 42 ist dabei mit der Mantelfläche 33 des Schwingstabs 30 verklebt. Zum Einsatz kommt hier ein spezieller Acrylglaskleber, welcher Licht aus dem Schwingstab 30 in die Scheibe 41 weiterleitet und insbesondere die Klebeflächen des Stabs 30 und der Scheibe 41 nicht eintrübt. Die Scheibe 41 weist eine erste Kreisfläche 43, eine zweite Kreisfläche 44 und eine Ringfläche 45 als Oberfläche auf. Die zweite Stirnseite 32 des Schwingstabs 30 schließt dabei bündig mit der zweiten Kreisfläche 44 ab. Die zweite Stirnfläche 32 ist mit einer Abdeckung 46 verbunden, insbesondere verklebt. Die Abdeckung 46 reflektiert das am Ende, d. h. an der zweiten Stirnseite 32 ankommende Licht vorzugsweise derart, dass es in die Scheibe 41 weitergeleitet wird. Die Abdeckung 46 ist dabei vom Durchmesser her größer ausgebildet als der Schwingstab 30. In einer alternativen Ausführungsform, welche nicht gezeigt ist, ist die Bohrung 42 als Sacklochbohrung ausgebildet, in welche der Schwingstab 30 eingebracht ist. In einer solchen Ausbildung ist die Abdeckung 46 mit der zweiten Kreisfläche 44 verbunden. Die Scheibe 41 ist in der gezeigten Ausführungsform aus demselben Material wie der Schwingstab 30 ausgebildet. In einer alternativen, nicht gezeigten Ausführungsform sind Schwingstab 30 und Leuchtelement 40 aus unterschiedlichen Materialien, d. h. unterschiedlichen Kunststoffen, hergestellt. Dies betrifft insbesondere die Einfärbung des Kunststoffes sowie die Wellenlänge des durch die fluoreszierenden Additive emittierten Lichts.

Das Licht, welches von der LED 26 in den Schwingstab 30 eingekoppelt wird, wird zumindest teilweise an das Leuchtelement 40 weitergeleitet. Das Licht erleuchtet dabei den lichtleitenden Kunststoff des Schwingstabs 30 und des Leuchtelements 40 von innen und strahlt dieses Licht an die Umgebung ab. Zudem regt es die fluoreszierenden Additive im Kunststoff an, so dass diese bei der Desaktivierung Licht abstrahlen und somit selbst leuchten. Somit überlagern sich die beiden Effekte, so dass eine optisch sehr intensive Wirkung entsteht. Bei Sonnenlicht werden die fluoreszierenden Additive zusätzlich noch von der Sonne angeregt. Durch die Verwendung einer LED 26, deren Licht in den Schwingstab 30 und das Leuchtelement 40 eingekoppelt wird, beschränkt sich die Leuchtwirkung der Gartenleuchte 1 nicht auf den Zeitraum, in dem Licht aus der Natur bzw. Umgebung vorhanden ist. Vielmehr wird die Nutzungsdauer über die Dämmerung hinaus in die Nacht hinein verlängert, bei welcher der Kontrast zur Umgebung und somit auch die Wirkung zunehmen. Die optische Wirkung wird dabei insbesondere auch durch die Überlagerung der beiden Effekte, eine aktive Beleuchtung durch die LED und das Selbstleuchten durch entsprechende Additive, verstärkt.

Wie bereits ausgeführt, ist der Stab 30 als Schwingstab ausgebildet. Dies bedeutet insbesondere, dass das aus Leuchtelement 40 und Schwingstab 30 gebildete Schwingsystem im Freien zum Schwingen angeregt werden kann. Eine Anregung erfolgt dabei insbesondere durch Luftströmungen wie Wind. Das Schwingsystem, d. h. insbesondere die Materialien, die Elastizitätsmodule und die Gewichte der einzelnen Elemente sind dabei derart aufeinander abgestimmt, dass die Gartenleuchten 1 im Wesentlichen senkrecht stehen und sich im Wind hin und her wiegt. Eine derartige Ausbildung wird beispielsweise bei Verwendung von PMMA erreicht, wenn der Schwingstab einen Durchmesser von 5 mm und eine Länge von 50 - 80 cm und die Scheibe eine Dicke von 5 mm und einen Durchmesser von 20 cm aufweist.

In den Figuren 4a - c sind unterschiedliche Ausführungsformen eines erfindungsgemäßen Fundaments 10 gezeigt. In Figur 4a ist das Fundament 11 als Spannmittel 13 nach Art einer Schraubzwinge ausgebildet. Der C-förmige Grundkörper des Spannmittels 13 weist eine Einstecköffnung 16 zur Aufnahme des Befestigungsabschnitts 21 auf. Derartige Spannmittel 13 sind geeignet, um erfindungsgemäße Gartenleuchten 1 an (Balkon-)Geländern, Brüstungen, Tischen oder dergleichen klemmend zu fixieren. Die in Figur 4b gezeigte Einschlaghülse 11 eignet sich für die Verwendung als Fundament im Erdboden, in Blumenkästen und dergleichen. In Figur 4c ist ein Ständer 14 gezeigt, welcher als erfindungsgemäßes Fundament 10 dient. Der Ständer 14 weist an seiner Oberseite die Einstecköffnung 16 zur Aufnahme des Befestigungsabschnitts auf. Der Ständer 14 weist dabei ein gewisses Eigengewicht auf, um Kräfte und Momente aufnehmen zu können und ist zur Verwendung auf ebenen Flächen wie Fußböden oder Fensterbänken gedacht.

Die in Figur 4a - c gezeigten Ausbildungen eines erfindungsgemäßen Fundaments 10 haben gemeinsam, dass sie eine Einstecköffnung 16 aufweisen. Die Einstecköffnung 16 ist zur Aufnahme des Befestigungsabschnitts 21 vorgesehen. Die Einstecköffnung 16 und der Befestigungsabschnitt 21 sind dabei derart aufeinander abgestimmt, dass der Befestigungsabschnitt 21 sicher im Fundament 10 aufgenommen wird. In einer Ausführungsform sind sowohl der Befestigungsabschnitt 21 als auch die Einstecköffnung 16 konisch bzw. kegelförmig ausgebildet. Dadurch wird sichergestellt, dass beim Einsetzen des Befestigungsabschnitts 21 in die Einstecköffnung 16 eine Presspassung entsteht. Der Befestigungsabschnitt 21 wird dabei über eine Befestigungslänge L in die Einstecköffnung 16 eingebracht. Dadurch ist gewährleistet, dass die über das Leuchtelement 40 und den Schwingstab 30 eingebrachten Kräfte und Momente sicher aufgenommen werden. Durch die Ausbildung einer Trennmöglichkeit am Befestigungsabschnitt 21 bzw. der Einstecköffnung 16 kann das Fundament in einfacher Art und Weise von den übrigen Elementen der Gartenleuchte 1 getrennt werden. Dadurch sind Oberteile der Gartenleuchte 1 bestehend aus Basismodul 20 mit Solarpanel 23 und LED 26, Schwingstab 30 und Leuchtelement 40, in einfacher Art und Weise mit verschiedenen Fundamenten 10 verwendbar, d. h. auch austauschbar und können in einfacher Art und Weise beispielsweise im Winter entfernt werden.

### Bezugszeichenliste

- 1: Gartenleuchte
- 10: Fundament
- 11: Einschlaghülse
- 12: Einschlagkeil
- 13: Spannmittel
- 14: Ständer
- 15: Abdeckung
- 16: Einstecköffnung
- 20: Basismodul
- 21: Befestigungsabschnitt
- 22: Solarpanelträger
- 23: Solarpanel
- 24: Batteriefach
- 25: Energiespeicher
- 26: LED
- 27: zentrale Bohrung
- 28: Tasche
- 30: Stab
- 31: erste Stirnseite
- 32: zweite Stirnseite
- 33: Mantelfläche
- 40: Leuchtelement
- 41: Scheibe
- 42: Bohrung
- 43: erste Kreisfläche
- 44: zweite Kreisfläche
- 45: Ringfläche
- 46: Abdeckung

## Patentansprüche

1. Gartenleuchte (1), aufweisend
ein Fundament (10),
einen Stab (30), ein mit dem Stab verbundenes Leuchtelement (40), eine von einem Solarpanel (23) gespeiste Lichtquelle (26), welche im Betrieb Licht im sichtbaren Spektrum aussendet, **dadurch gekennzeichnet, dass** der Stab (30) aus einem ersten selbstleuchtenden Kunststoff besteht, dass das mit dem Stab (30) verbundene Leuchtelement (40) aus einem zweiten selbstleuchtenden Kunststoff besteht, wobei die Lichtquelle (26) derart an einer ersten Stirnseite des Stabs (31) angeordnet ist, dass das von der Lichtquelle (26) emittierte Licht in den Stab (30) eingekoppelt wird und diesen durchdringt, und der Stab (30) derart mit dem Leuchtelement (40) verbunden ist, dass das in den Stab (30) eingekoppelte Licht in das Leuchtelement (40) eingeleitet wird, sodass sowohl der Stab (30) als auch das Leuchtelement (40) über ihre Oberfläche das vom selbstleuchtenden Kunststoff emittierte und das von der Lichtquelle (26) eingeleitete Licht zumindest zeitweise zeitparallel abstrahlen.

2. Gartenleuchte (1) nach Anspruch 1, **dadurch gekennzeichnet, dass** der Stab (30) ein Schwingstab ist.

3. Gartenleuchte (1), aufweisend
ein Fundament (10), einen Schwingstab (30), ein mit dem Schwingstab (30) verbundenes Leuchtelement (40), eine von einem Solarpanel (23) gespeiste Lichtquelle (26), welche im Betrieb Licht im sichtbaren Spektrum aussendet, **dadurch gekennzeichnet, dass** der Schwingstab (30) aus einem ersten selbstleuchtenden Kunststoff besteht, dass das mit dem Schwingstab (30) verbundene Leuchtelement (40) aus einem zweiten selbstleuchtenden Kunststoff besteht, wobei die Lichtquelle (26) derart an einer ersten Stirnseite des Schwingstabs (31) angeordnet ist, dass das von der Lichtquelle (26) emittierte Licht in den Schwingstab (30) eingekoppelt wird und diesen durchdringt, und der Schwingstab (30) derart mit dem Leuchtelement (40) verbunden ist, dass das in den Schwingstab (30) eingekoppelte Licht in das Leuchtelement (40) eingeleitet wird, sodass sowohl der Schwingstab (30) als auch das Leuchtelement (40) über ihre Oberfläche das von der Lichtquelle (26) eingeleitete Licht abstrahlen.

4. Gartenleuchte (1) nach Anspruch 3, **dadurch gekennzeichnet, dass** der erste oder/und der zweite lichtleitende Kunststoff selbstleuchtend sind.

5. Gartenleuchte (1) nach Anspruch 1, 2 oder 4, **dadurch gekennzeichnet, dass** es sich bei dem ersten und/oder zweiten selbstleuchtenden Kunststoff um einen fluoreszierenden Kunststoff, insbesondere fluoreszierendes PMMA, handelt.

6. Gartenleuchte (1) nach einem der vorherigen Ansprüche, **dadurch gekennzeichnet, dass** der erste Kunststoff dem zweiten Kunststoff entspricht.

7. Gartenleuchte (1) nach einem der vorherigen Ansprüche, **dadurch gekennzeichnet, dass** der Stab (30) und das Leuchtelement (40) mittels eines lichtleitenden Klebers verbunden sind.

8. Gartenleuchte (1) nach einem der vorherigen Ansprüche, **dadurch gekennzeichnet, dass** das Leuchtelement (40) eine Scheibe (41) ist, welche den Stab (30) im Bereich einer zweiten (32), der ersten (31) gegenüberliegenden Stirnseite mantelseitig umgibt.

9. Gartenleuchte (1) nach Anspruch 8, **dadurch gekennzeichnet, dass** die zweite Stirnseite (32)mit einem lichtundurchlässigen Element (46) verbunden ist oder ein lichtundurchlässiges Element (46) auf einer Längsachse des Stabs (30) an der Scheibe (41) angeordnet ist.

10. Gartenleuchte (1) nach Anspruch 8 oder 9, **dadurch gekennzeichnet, dass** die Scheibe (41) eine Dicke von 2 bis 5 mm und einen Durchmesser von 10 bis 30cm, vorzugswiese 20 cm, aufweist.

11. Gartenleuchte (1) nach einem der vorherigen Ansprüche, **dadurch gekennzeichnet, dass** der Stab (30) einen Durchmesser von etwa 5 mm und eine Länge von 50 bis 80 cm aufweist.

12. Gartenleuchte (1) nach einem der vorherigen Ansprüche, **dadurch gekennzeichnet, dass** der selbstleuchtende Kunststoff Licht in zumindest einem der folgenden sichtbaren Farbbereiche gelb, orange oder grün emittiert.

13. Gartenleuchte (1) nach einem der vorherigen Ansprüche, **dadurch gekennzeichnet, dass** das Fundament (10) eine Einschlaghülse (11), einen Ständer (14) oder eine Schraubschelle (13) umfasst, in welche ein stabseitiges Formteil (21) oder der Stab (30) formschlüssig einsteckbar und gehalten ist.

14. Gartenleuchte (1) nach einem der vorherigen Ansprüche, **dadurch gekennzeichnet, dass** die Lichtquelle (26) eine LED, vorzugsweise eine SMD-LED, ist, welche insbesondere kaltweises Licht emittiert oder als RGB-LED ausgebildet ist.

15. Gartenleuchte (1) nach einem der vorherigen Ansprüche, **dadurch gekennzeichnet, dass** der selbstleuchtende Kunststoff durch das von der Lichtquelle (26) ausgesendete Licht anregbar ist.

## Claims

1. Garden light (1), having
a foundation (10),
a rod (30),
a lighting element (40) connected to the rod,
a light source (26) fed by a solar panel (23), which emits light in the visible spectrum during operation,
**characterized in that** the rod (30) consists of a first self-illuminating plastic, **in that** the lighting element (40) connected to the rod (30) consists of a second self-illuminating plastic,
wherein the light source (26) is arranged at a first end of the rod (31) in such a way that the light emitted by the light source (26) is coupled into the rod (30) and passes through the latter, and the rod (30) is connected to the lighting element (40) in such a way that the light coupled into the rod (30) is introduced into the lighting element (40), so that both the rod (30) and the lighting element (40) emit over their surface the light emitted by the self-illuminating plastic and the light introduced from the light source (26), at least partly simultaneously.

2. Garden light (1) according to Claim 1, **characterized in that** the rod (30) is an oscillating rod.

3. Garden light (1), having
a foundation (10),
an oscillating rod (30),
a lighting element (40) connected to the oscillating rod (30),
a light source (26) fed by a solar panel (23), which emits light in the visible spectrum during operation,
**characterized in that** the oscillating rod (30) consists of a first self-illuminating plastic, **in that** the lighting element (40) connected to the oscillating rod (30) consists of a second self-illuminating plastic,
wherein the light source (26) is arranged on a first end of the oscillating rod (31) in such a way that the light emitted by the light source (26) is coupled into the oscillating rod (30) and passes through the latter, and the oscillating rod (30) is connected to the lighting element (40) in such a way that the light coupled into the oscillating rod (30) is introduced into the lighting element (40), so that both the oscillating rod (30) and the lighting element (40) emit over their surface the light introduced by the light source (26).

4. Garden light (1) according to Claim 3, **characterized in that** the first and/or the second light-conducting plastic is/are self-illuminating.

5. Garden light (1) according to Claim 1, 2 or 4, **characterized in that** the first and/or second self-illuminating plastic is a fluorescent plastic, in particular fluorescent PMMA.

6. Garden light (1) according to one of the preceding claims, **characterized in that** the first plastic corresponds to the second plastic.

7. Garden light (1) according to one of the preceding claims, **characterized in that** the rod (30) and the lighting element (40) are connected by means of a light-conducting adhesive.

8. Garden light (1) according to one of the preceding claims, **characterized in that** the lighting element (40) is a disc (41), which surrounds the rod (30) on the outer side in the region of a second end (32), opposite to the first end (31).

9. Garden light (1) according to Claim 8, **characterized in that** the second end (32) is connected to an opaque element (46), or an opaque element (46) is arranged on the disc (41) on a longitudinal axis of the rod (30).

10. Garden light (1) according to Claim 8 or 9, **characterized in that** the disc (41) has a thickness of 2 to 5 mm and a diameter of 10 to 30 cm, preferably 20 cm.

11. Garden light (1) according to one of the preceding claims, **characterized in that** the rod (30) has a diameter of about 5 mm and a length of 50 to 80 cm.

12. Garden light (1) according to one of the preceding claims, **characterized in that** the self-illuminating plastic emits light in at least one of the following visible colour ranges yellow, orange or green.

13. Garden light (1) according to one of the preceding claims, **characterized in that** the foundation (10) comprises a drive-in sleeve (11), a stand (14) or a screw clamp (13), into which a rod-like moulding (21) or the rod (30) can be plugged and retained in a form-fitting manner.

14. Garden light (1) according to one of the preceding claims, **characterized in that** the light source (26) is an LED, preferably an SMD LED, which in particular emits cold light or is formed as an RGB LED.

15. Garden light (1) according to one of the preceding claims, **characterized in that** the self-illuminating plastic can be excited by the light emitted by the light source (26).

## Revendications

1. Lampe de jardin (1), présentant
une base (10),
une barre (30),
un élément lumineux (40) raccordé à la barre,
une source de lumière (26) alimentée par un panneau solaire (23), qui, pendant le fonctionnement, émet de la lumière dans le spectre visible, **caractérisée en ce que** la barre (30) se compose d'une première matière plastique luminescente, **en ce que** l'élément lumineux (40) raccordé à la barre (30) se compose d'une deuxième matière plastique luminescente,
la source de lumière (26) étant disposée sur un premier côté frontal de la barre (31) de telle sorte que la lumière émise par la source de lumière (26) est injectée dans la barre (30) et traverse cette dernière, et la barre (30) est raccordée à l'élément lumineux (40) de telle sorte que la lumière injectée dans la barre (30) est introduite dans l'élément lumineux (40) de telle sorte que aussi bien la barre (30) que l'élément lumineux (40) émettent, au moins par moments de façon temporellement parallèle, via leur surface, la lumière émise par la matière plastique luminescente et la lumière introduite par la source de lumière (26).

2. Lampe de jardin (1) selon la revendication 1, **caractérisée en ce que** la barre (30) est une barre oscillante.

3. Lampe de jardin (1), présentant
une base (10),
une barre oscillante (30),
un élément lumineux (40) raccordé à la barre oscillante (30),
une source de lumière (26) alimentée par un panneau solaire (23), qui, pendant le fonctionnement, émet de la lumière dans le spectre visible, **caractérisée en ce que** la barre oscillante (30) se compose d'une première matière plastique luminescente, **en ce que** l'élément lumineux (40) raccordé à la barre oscillante (30) se compose d'une deuxième matière plastique luminescente, la source de lumière (26) étant disposée sur un premier côté frontal de la barre oscillante (31) de telle sorte que la lumière émise par la source de lumière (26) est injectée dans la barre oscillante (30) et traverse cette dernière, et la barre oscillante (30) est raccordée à l'élément lumineux (40) de telle sorte que la lumière injectée dans la barre (30) est introduite dans l'élément lumineux (40) de telle sorte que aussi bien la barre oscillante (30) que l'élément lumineux (40) émettent via leur surface la lumière introduite par la source de lumière (26).

4. Lampe de jardin (1) selon la revendication 3, **caractérisée en ce que** la première et/ou la deuxième matière plastique conduisant la lumière sont luminescentes.

5. Lampe de jardin (1) selon la revendication 1, 2 ou 4, **caractérisée en ce que**, en ce qui concerne la première et/ou la deuxième matière plastique luminescente, il s'agit de matière plastique fluorescente, en particulier de PMMA fluorescent.

6. Lampe de jardin (1) selon l'une des revendications précédentes, **caractérisée en ce que** la première matière plastique correspond à la deuxième matière plastique.

7. Lampe de jardin (1) selon l'une des revendications précédentes, **caractérisée en ce que** la barre (30) et l'élément lumineux (40) sont raccordés au moyen d'une colle conduisant la lumière.

8. Lampe de jardin (1) selon l'une des revendications précédentes, **caractérisée en ce que** l'élément lumineux (40) est un disque (41) qui entoure, côté enveloppe, la barre (30) dans la zone d'un deuxième côté frontal(32) opposé au premier côté frontal(31).

9. Lampe de jardin (1) selon la revendication 8, **caractérisée en ce que** le deuxième côté frontal (32) est raccordé à un élément opaque (46) ou **en ce qu'**un élément opaque (46) est disposé sur un axe longitudinal de la barre (30) sur le disque (41).

10. Lampe de jardin (1) selon la revendication 8 ou 9, **caractérisée en ce que** le disque (41) présente une épaisseur de 2 à 5 mm et un diamètre de 10 à 30 cm, de préférence de 20 cm.

11. Lampe de jardin (1) selon l'une des revendications précédentes, **caractérisée en ce que** la barre (30) présente un diamètre d'environ 5 mm et une longueur de 50 à 80 cm.

12. Lampe de jardin (1) selon l'une des revendications précédentes, **caractérisée en ce que** la matière plastique luminescente émet de la lumière dans au moins une des plages chromatiques visibles suivantes : jaune, orange ou vert.

13. Lampe de jardin (1) selon l'une des revendications précédentes, **caractérisée en ce que** la base (10) comprend une douille à enfoncer (11), un support (14) ou une bride à vis (13) dans laquelle une pièce moulée (21) côté barre ou la barre (30) peut être enfichée par liaison de forme et retenue.

14. Lampe de jardin (1) selon l'une des revendications précédentes, **caractérisée en ce que** la source de lumière (26) est une LED, de préférence une LED SMD, qui émet en particulier de la lumière blanche froide ou qui est constituée en tant que LED RGB.

15. Lampe de jardin (1) selon l'une des revendications précédentes, **caractérisée en ce que** la matière plastique luminescente peut être excitée par la lumière émise par la source de lumière (26).
